# EUROPÄISCHE PATENTANMELDUNG

(11) **EP 1 508 509 A2**
(43) Veröffentlichungstag der Anmeldung: **23.02.2005**
(21) Anmeldenummer: 04028020.8
(22) Anmeldetag: 27.09.1999
(51) Int. Cl.: B62D 29/00

(54) **Verbundbauteil für Fahrzeugkarosserien**

(30) Priorität: 21.10.1998 DE 19848539
(62) Teilanmeldung aus: 01128467.6
(71) Anmelder: ArvinMeritor GmbH, 63128 Dietzenbach (DE)
(72) Erfinder: Böhm, Horst, 60599 Frankfurt (DE); Grimm, Rainer, 60599 Frankfurt (DE); Becher, Thomas, 63110 Rodgau (DE)
(74) Vertreter: Kitzhofer, Thomas, Dipl.-Ing.

(57) **Zusammenfassung**

Die Erfindung betrifft ein Verfahren zum Herstellen eines rahmenlosen Verbundbauteils für Fahrzeugkarosserien, insbesondere für großflächige Verbundbauteile in Form von Fahrzeugdächern, Hauben, Türen, Klappen und Deckeln, die abschnittsweise die Außenfläche des Fahrzeugs definieren. Folgende Schritte sind vorgesehen: eine Folie wird zur Bildung der Außenhaut (1) tiefgezogen unter Bildung einer umlaufenden Aufkantung (6), anschließend in eine Schäumform eingelegt und rückseitig vollflächig hinterschäumt, indem mit Fasern, insbesondere mit Glasfasern, beladener aufschäumender Kunststoff innenseitig auf die Folie aufgebracht wird. Der aufschäumende Kunststoff erstreckt sich bis zu der Aufkantung (6), wobei die Fasern eine an sich nicht steife Armierung bilden, durch welche der Elastizitätsmodul der geschäumten Kunststoffschicht (2) erhöht wird. Ferner ist ein Verbundbauteil vorgeschlagen.

## Beschreibung

Die Erfindung bezieht sich auf ein Verbundbauteil für Fahrzeugkarosserien, insbesondere für Fahrzeugdächer, entsprechend dem Oberbegriff des Patentanspruchs 1.

Erfindungsgemäß ausgebildete Verbundbauteile sind grundsätzlich für alle Flächenbereiche von Fahrzeugkarosserien, einschließlich der Hauben, Türen und Klappen/Deckel, geeignet, für die neben einer ausreichenden Beulsteifigkeit und Festigkeit wie Biegefestigkeit und Torsionsfestigkeit bei geringem Gewicht gute Wärme- und/oder Schallisolationseigenschaften verlangt werden. Wenn nachfolgend von einem Fahrzeugdach bzw. einer Motorhaube die Rede ist, handelt es sich zwar um bevorzugte Anwendungsorte der Erfindung, jedoch ohne darauf einschränkende Bedeutung.

Um bei einem bekannten Dachaufbau (GM 79 29 367 U1) der im Oberbegriff des Patentanspruchs 1 angegebenen Ausbildung eine ausreichende Beulsteifigkeit zu erreichen, ist ein zunächst getrennter verwindungssteifer Halbzeug-Profilrahmen anzufertigen, der dann an der Dachhaut längs deren Rändern unlösbar zu befestigen ist. Die aufgeschäumte Kunststoffschicht überdeckt auch den mit der Dachhaut unlösbar verbundenen Halbzeug-Profilrahmen. Soll eine aus Leichtmetall oder aus Kunststoff bestehende Dachhaut wirksam gegen Einbeulung versteift werden, ist nach dem bekannten Vorschlag wenigstens eine sich quer zu den Längsholmen des Halbzeug-Profilrahmens erstreckende Profilstrebe vorzusehen. Der bekannte Dachaufbau erfordert einen erheblichen Fertigungs- und Materialaufwand.

Entsprechendes gilt für die aus der GB 2 311 966 A bekannten Verbundbauteile für Fahrzeugkarosserien. Gemäß diesem Stand der Technik werden eine äußere Schale und eine innere Schale für das Verbundbauteil mittels Spritzgießen aus Kunststoff hergestellt und in einem Folgeschritt durch einen Kunststoffschweißvorgang oder unter Zuhilfenahme von Klebstoff entlang ihrer Ränder fest und dicht miteinander verbunden. Dann wird der entstandene Hohlkörper mit einer aushärtenden Füllung aus Kunststoff gefüllt. Alternativ dazu kann auch ein Füllkörper vorgefertigt werden, der zwischen der äußeren und der inneren Schale einzufügen ist, wenn diese miteinander verbunden werden. Für höhere Festigkeitserfordernisse sind Versteifungsteile aus Aluminium im Hohlraum zwischen äußerer und innerer Schale vorzusehen, wobei die äußere Schale mit Kanälen zur Aufnahme der Versteifungsteile ausgebildet ist.

Schließlich sind auch Dächer aus Verbundwerkstoff bekannt (DE 32 02 594 C2), die aus einer luft- und regendichten Außenschicht, einer mittleren, eigensteifen Waben-/Strukturschicht mit Aluminium- oder Pappstegen bzw. halbharten Schaum- und Vliesstrukturen, einer halbsteifen, porösen Innenschicht und einer Polster- und/oder Dekorschicht mittels eines Heißpreßverfahrens gefertigt sind.

Der Erfindung liegt die Aufgabe zugrunde, ein gegenüber dem gattungsbildenden Stand der Technik vereinfachtes, leichtes aber dennoch ausreichend steifes Verbundbauteil für Fahrzeugkarosserien bereitzustellen, welches auch einfach hergestellt werden kann.

Die gestellte Aufgabe wird durch die im Anspruch 1 angegebenen Merkmale gelöst. Vorteilhafte und/oder zweckmäßige Weiterbildungen gehen aus den Unteransprüchen 2 bis 25 hervor und werden nachfolgend ebenfalls erläutert.

Erfindungsgemäß ist bei einem Verbundbauteil für Fahrzeugkarosserien, welches eine tiefgezogene Außenhaut und eine der Innenseite der Außenhaut aufgeschäumte Kunststoffschicht aufweist, die auf ihrer Oberfläche ggf. mit einem textilen Flächengebilde oder einer dekorativen Kunststoffolie versehen ist, die Außenhaut an ihren Rändern rahmenlos ausgebildet und mit einer umlaufenden Aufkantung versehen, wobei die geschäumte Kunststoffschicht bis zu der Aufkantung reicht und in der geschäumten Kunststoffschicht über den gesamten Flächenbereich der Außenhaut eine an sich nicht steife Armierung vorgesehen ist, durch welche der Elastizitätsmodul der geschäumten Kunststoffschicht erhöht ist.

Durch die erfindungsgemäßen Maßnahmen wird ein Verbundbauteil für Fahrzeugkarosserien geschaffen, das ohne aufwendige zusätzliche Profilelemente für Rahmen und Streben auskommt, dennoch aufgrund des Zusammenwirkens von Außenhaut und armierter Kunststoffschicht eine Beulsteifigkeit und Gesamtfestigkeit erhält, die allen Anforderungen an die Formstabilität des Verbundbauteils bei allen Betriebsbeanspruchungen des Fahrzeugs genügt. Die erfindungsgemäß vorgesehene nicht eigensteife Armierung innerhalb der Kunststoffschicht ermöglicht eine wirksame Armierung der Kunststoffschicht bis in die Randbereiche der auf besondere Weise mit einer umlaufenden Aufkantung ausgebildeten Außenhaut hinein.

Als Armierung kommen nichteigensteife bzw. biegeschlaffe Gewebe, Gewirke, Vliese, Gitter, Matten u.dgl. aus beispielsweise Glas-, Kunststoff- (z.B. Polyester- oder Aramid-) und/oder Kohle-Fasern in Betracht, soweit sie sich der Form der Außenhaut bis in deren Randbereiche hinein anpassen und von dem aufschäumenden Kunststoff in dem geschlossenen Schäumwerkzeug durchdrungen und umhüllt werden können. Vorzugsweise werden aber gemäß Anspruch 2 Faserstoffe für die Bildung der Armierung verwendet, welche als Faserlängenabschnitte in gleichmäßiger Verteilung, aber in ungeordneter Lage der Kunststoffschicht einverleibt sind. Besonders gute Ergebnisse wurden durch Verwendung einer Armierung aus Glasfaserstoffen gemäß Anspruch 3 erzielt, die in Längenabschnitten von verdrillten Glasfaserbündeln von etwa 4800 tex zwischen ca. 12,5 mm und ca. 100 mm Länge vorliegen. Der Elastizitätsmodul des geschäumten Kunststoffes, der ohne diese Armierung etwa einen Wert von 300 N/mm² aufweist, konnte entsprechend Anspruch 4 bei Einbringung einer Glasfaserarmierung von 25 Gew.% bezogen auf das Gesamtgewicht des armierten Kunststoffschaums auf über 1600 N/mm² erhöht werden.

Die Glasfaserstoffe können gemäß Anspruch 5 in Längenabschnitten unterschiedlicher Länge verwendet werden, wobei durch Verwendung zweier unterschiedlicher Längen mit einem größeren Anteil an der kleineren Länge - gemäß Anspruch 6 etwa zwei Drittel der Glasfasermenge - besonders gute Armierungsergebnisse erzielt worden sind. Im Rahmen des im Anspruch 3 angegebenen Längenabschnittsbereichs können aber auch nach Anspruch 7 Längenabschnitte einheitlicher Länge zum Einsatz kommen.

Für die Außenhaut eignen sich metallische Werkstoffe wie Stahloder Aluminiumbleche. Aber auch die Verwendung einer vakuumtiefgezogenen Außenhaut aus einer thermoplastischen Kunststofffolie, vorzugsweise einer zweischichtigen Koextrusionsfolie gemäß Anspruch 8, ergibt ein Verbundbauteil überzeugender Stabilität. Die Koextrusionsfolie besteht vorteilhaft aus den im Anspruch 9 angegebenen Werkstoffen, nämlich PMMA für die äußere Schicht sowie einer Mischung aus PC und ASA für die innere Schicht, und weist die dort angegebenen Schichtdickenverhältnisse auf, wonach die Dicke der äußeren Schicht vorzugsweise etwa 15 % der Gesamtdicke der Außenhaut ausmacht. Beispielsweise beträgt die Gesamtdicke der Koextrusionsfolie etwa 1,3 mm, wovon etwa 0,2 mm auf die äußere Schicht entfallen.

Die Verwendung einer Kunststoffolie bietet auch den Vorteil, daß gemäß Anspruch 10 der Kunststoff in der Masse in der gewünschten Farbe durchgefärbt sein kann, so daß das Verbundbauteil nachträglich nicht zusätzlich zu lackieren ist. Wie im Anspruch 11 angegeben kann die Kunststoffolie außerdem durch Verwendung einer hochglanzpolierten Tiefziehform bei Herstellung der schalenförmigen Außenhaut eine glänzende Oberfläche oder durch vorhergehendes Kalandrieren eine genarbte Oberfläche erhalten.

Wenn die Außenhaut gemäß Anspruch 12 aus einem dünnen Aluminiumblech geformt ist, kann dessen Dicke dank der armierten Kunststoffschicht im Interesse einer Gewichtsersparnis verhältnismäßig gering sein, vorzugsweise ca. 0,6 mm. Für die Außenhaut besonders geeignet ist die im Anspruch 13 angegebene Aluminiumlegierung AlMg 0,4 Si 1,2.

Bei Verwendung eines Aluminiumblechs als Werkstoff für die tiefgezogene Außenhaut kann das Blech vor seiner hydraulischen Tiefziehverformung in der gewünschten Farbe fertig lackiert und mit einer Schutzfolie versehen sein, wie im Anspruch 14 angegeben. Bei der Tiefziehverformung bleibt die Lackschicht unversehrt, wie sich nach Abziehen der Schutzfolie zeigt. Der Lackaufbau kann mehrschichtig sein, um die Verformung des Aluminiumblechs ohne Risse oder sonstige Beschädigungen zu überstehen. Auf einer Primärschicht auf Epoxydharzbasis von etwa 5 bis 7 µm Dicke kann ein Decklack auf Polyesterbasis von etwa 18 bis 23 µm Dicke aufgetragen sein, der wiederum von einer Klarlackschicht aus PVDF von 22 µm Dicke überdeckt sein kann. Die Einbrenntemperatur für einen derartigen mehrschichtigen Lackaufbau beträgt etwa 240°C. Die hydraulische Tiefziehverformung des fertig lackierten Aluminiumblechs kann in mehreren Stufen, beispielsweise drei Stufen, erfolgen. Tiefziehgeschwindigkeiten von 60 mm/s haben sich als unschädlich für den Lackaufbau erwiesen.

Nach Anspruch 15 geht die Aufkantung der Außenhaut vor Randbeschnitt in einen davon nach außen abgewinkelten umlaufenden Flanschrand über, wobei die armierte Kunststoffschicht an der Aufkantung entlang bis auf den Flanschrand geführt ist. Das Randbeschneiden des Verbundbauteils beispielsweise durch Konturfräsen oder Laserschnitt entfernt den abgewinkelten umlaufenden Flanschrand und den äußeren Bereich der Aufkantung der Außenhaut sowie die an den dabei abfallenden Bereichen anhaftende armierte Kunststoffschicht. Es bleibt nach dem Beschneiden ein für die Festigkeit erheblicher Aufkantungsrand der Außenhaut und die armierte Kunststoffschicht am Aufkantungsrand erhalten. Der Randschnitt wird sowohl durch die Aufkantung als auch durch die armierte Kunststoffschicht geführt, wodurch eine Schnittfläche entsteht, die bei einer Ausbildung als Fahrzeugdach unmittelbar auf den an der Fahrzeugkarosserie befindlichen Dachrahmen aufgesetzt werden kann.

Der Anspruch 16 gibt hier eine Ausbildungsvariante für die umlaufende Aufkantung der Außenhaut an, gemäß der die Aufkantung in einen davon nach außen abgewinkelten umlaufenden Flanschrand übergeht, welcher beim Aufschäumen der Kunststoffschicht auf der Innenseite der Außenhaut einer Dichtung über seine gesamte Breite flächig anliegt, um zwischen Unterteil und Oberteil der Schäumform abzudichten. Bei dieser Ausbildungsvariante entfällt das oben angesprochene Randbeschneiden nach dem Schäumvorgang gänzlich. Vielmehr kann bereits beim Tiefziehen der Außenhaut oder in einem Folgeschritt der nach außen abgewinkelte umlaufende Flanschrand zur Ausbildung einer definierten Abschlußgeometrie der Außenhaut gestanzt oder feingeschnitten werden. Der umlaufende Flanschrand sorgt bei dem dann folgenden Schäumvorgang unter flächiger Anlage an einer Dichtung der Schäumform vorteilhaft für eine gute und saubere Abdichtung der Schäumform. Zwar ist es grundsätzlich möglich, daß die Außenhaut vor dem Schäumvorgang nur eine umlaufende Aufkantung aufweist, ohne einen davon nach außen abgewinkelten Flanschrand, der ggf. bereits entfernt wurde. Jedoch gestaltet sich dann die Abdichtung der Schäumform schwieriger, insbesondere kann die scharfe Abschlußkante der Aufkantung einen negativen Einfluß auf die Standzeit der Dichtung der Schäumform haben.

Nach einer besonders vorteilhaften Ausgestaltung des Verbundbauteils gemäß Anspruch 17 ist auf die Aufkantung der tiefgezogenen Außenhaut eine Dichtung aufgesteckt, die einen zweischenkligen, im wesentlichen U-förmigen Querschnitt aufweist, wobei der innere Schenkel der Dichtung an die Kunststoffschicht angeschäumt ist, während der äußere Schenkel die Dichtungsfläche bildet. Im Ergebnis ist das Verbundbauteil nach dem Aufschäumen der Kunststoffschicht auf der Innenseite der Außenhaut in vorteilhafter Weise bereits mit einer integrierten Dichtung versehen, die das Verbundbauteil gegenüber angrenzenden Karosseriebauteilen abdichtet, ohne daß dazu weitere Arbeitsschritte, beispielsweise das Aufstecken einer zusätzlichen, zunächst getrennt bereitzustellenden Dichtung auf das fertige Verbundbauteil vonnöten wären, was weitere Kosteneinsparungen mit sich bringt. Diese Ausgestaltung bietet noch den zusätzlichen Vorteil, daß die Dichtung schon beim Schäumvorgang zwischen dem Unterteil und dem Oberteil der Schäumform abdichten kann, wie im Anspruch 18 angegeben, so daß an dieser Stelle in der Schäumform keine Dichtung vorgesehen werden muß, die durch wiederholten Gebrauch verschleißen würde.

Die Kunststoffschicht besteht wie im Anspruch 19 angegeben aus einem PUR-Schaum, der aus einem Polyol und einem Isocyanat im angegebenen Mischungsverhältnis, nämlich etwa 1 zu 2, gebildet ist. Die Mischung der beiden Kunststoffkomponenten mit der Glasfaserarmierung erfolgt nach dem bekannten LFI-Verfahren (Long Fiber Injection).

Die im Mischkopf durchmischte flüssige Kunststoff/Glasfaser-Masse wird hierbei auf die mit ihrer Innenseite nach oben weisend in das Unterteil des Schäumwerkzeugs eingelegte tiefgezogene Außenhaut.etwa in deren Mitte beginnend über einen etwa spiralförmigen Weg aufgetragen, bevor das Werkzeugoberteil in die der vorgesehenen Dicke der geschäumten Kunststoffschicht entsprechende Position oberhalb des Werkzeugunterteils gebracht wird. Der auftreibende Schaum füllt die Form und dringt bis in die ggf. später zu beschneidenden Randbereiche der Außenhaut, jedenfalls bis zur umlaufenden Aufkantung der Außenhaut vor.

Wird eine Kunststoffolie als Außenhaut verwendet, wird die Innenseite der Außenhaut entsprechend Anspruch 20 zweckmäßig vor dem Auftragen des schäumbaren Kunststoffs zur Aktivierung abgeflämmt, wodurch eine ausgezeichnete Verbindung der Außenhaut mit der geschäumten Kunststoffschicht erzielt wird.

Falls auf der Oberfläche der aufgeschäumten Kunststoffschicht ein dekoratives Flächengebilde vorgesehen werden soll, kann dieses aus den im Anspruch 21 aufgeführten Materialien ausgewählt werden und wird in der Schäumform auf die der Außenhaut abgelegene Seite der Kunststoffschicht aufgebracht, so daß es zu einer festen Verbindung zwischen der aufschäumenden Kunststoffschicht und dem dekorativen Flächengebilde kommt. Zweckmäßig ist hierbei das dekorative Flächengebilde vorübergehend an dem Oberteil des Schäumwerkzeugs aufgespannt, wird von diesem in die Schäumposition mitgenommen und verbleibt nach der Entfernung des Werkzeugoberteils auf der Kunststoffschicht.

Bei Verwendung eines porösen dekorativen Flächengebildes ist gemäß Anspruch 22 vorgesehen, daß das Flächengebilde in sich mehrschichtig aufgebaut ist, wobei das Flächengebilde mit einer der Kunststoffschicht zugekehrten Sperrschicht versehen ist, welche ein Durchschlagen des aufschäumenden Kunststoffs durch die Poren des dekorativen Flächengebildes in dessen Sichtbereich hinein verhindert.

Das Verbundbauteil kann in vorteilhafter Weise schon beim Schäumvorgang mit weiteren Funktionselementen versehen werden. So stellt der Anspruch 23 auf ein Verbundbauteil für insbesondere ein Fahrzeugdach ab, dessen Außenhaut eine Öffnung aufweist, wobei auf der von der Außenhaut abgelegenen Seite der Kunststoffschicht ein Führungsprofil für einen die Öffnung wahlweise verschließenden Schiebedeckel angeschäumt ist.

Gemäß Anspruch 24 kann weiterhin auf der von der Außenhaut abgelegenen Seite der Kunststoffschicht schon beim Schäumvorgang eine schallabsorbierende Oberflächenstruktur hinterschäumt werden, wodurch sich die Schallisolationseigenschaften des Verbundbauteils für die Ausbildung von z.B. Motorhauben auf einfache Weise noch verbessern lassen. Anstelle von oder zusätzlich zu diesen die Makrogeometrie der Oberfläche der Kunststoffschicht betreffenden Maßnahmen kann schließlich auch eine den jeweiligen Schallisolationserfordernissen entsprechende Gestaltung der Mikrogeometrie der von der Außenhaut abgewandten Seite des Verbundbauteils erfolgen, wie im Anspruch 25 angegeben, gemäß dem auf der von der Außenhaut abgelegenen Seite der Kunststoffschicht partiell Dämpfungsbereiche mit verminderter Dichte des Schaummaterials angeschäumt sind. Dieses Anschäumen der Dämpfungsbereiche an die Kunststoffschicht erfolgt zweckmäßig in einem zweiten Schuß, d.h. nach Aufschäumen der Kunststoffschicht auf der Innenseite der Außenhaut werden die Dämpfungsbereiche in einem Folgeschritt an die Kunststoffschicht angeschäumt.

Im folgenden wird die Erfindung anhand bevorzugter Ausführungsbeispiele unter Bezugnahme auf die beigefügte Zeichnung näher erläutert, wobei gleiche Bezugszahlen den gleichen bzw. entsprechenden Teilen zugeordnet sind. In der Zeichnung zeigen:
- Fig. 1: einen abgebrochenen Schnitt durch den Randbereich eines in einer geschlossenen Schäumform befindlichen Fahrzeugdachs gemäß einem ersten Ausführungsbeispiel der Erfindung,
- Fig. 2: einen abgebrochenen Schnitt durch den Randbereich des fertigen Fahrzeugdachs gemäß dem ersten Ausführungsbeispiel,
- Fig. 3: einen abgebrochenen Schnitt durch den Randbereich eines in einer geschlossenen Schäumform befindlichen, für ein Schiebedach vorgerüsteten Fahrzeugdachs gemäß einem zweiten Ausführungsbeispiel der Erfindung,
- Fig. 4: einen abgebrochenen Schnitt durch den Randbereich eines in einer geschlossenen Schäumform befindlichen Fahrzeugdachs gemäß einem dritten Ausführungsbeispiel der Erfindung,
- Fig. 5: einen abgebrochenen Schnitt durch den Randbereich eines in einer geschlossenen Schäumform befindlichen Fahrzeugdachs gemäß einem vierten Ausführungsbeispiel der Erfindung,
- Fig. 6: einen abgebrochenen Schnitt durch den Randbereich des fertigen Fahrzeugdachs gemäß dem vierten Ausführungsbeispiel, welches an einem Dachrahmen montiert ist,
- Fig. 7: eine schematische Perspektivansicht einer schon an einer PKW-Karosserie angebrachten, erfindungsgemäß ausgebildeten Motorhaube und
- Fig. 8: einen abgebrochenen Schnitt der Motorhaube entsprechend der Linie A-A in Fig. 7.

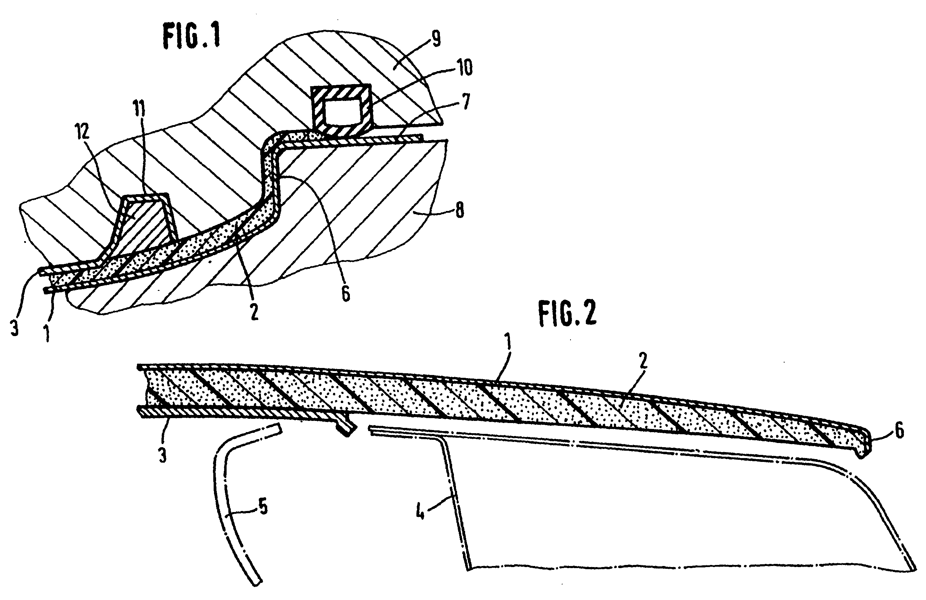

In den Fig. 1 und 2 sind eine tiefgezogene Außenhaut 1, eine der Innenseite der Außenhaut 1 aufgeschäumte Kunststoffschicht 2 und ein dekoratives auf der Sichtseite des Fahrzeugdachs befindliches Flächengebilde 3 ersichtlich. In Fig. 1 ist das Fahrzeugdach für den Schäumvorgang mit seiner Innenseite nach oben gekehrt, während in Fig. 2 das Fahrzeugdach in seiner montierten Lage dargestellt ist. In Fig. 2 sind in strichpunktierten Linien ein Dachrahmen 4 einer Fahrzeugkarosserie und eine Verkleidung 5 für den Dachrahmen 4 schematisch eingezeichnet. Das Fahrzeugdach sitzt dem Dachrahmen 4 von oben auf und ist mit diesem auf nicht dargestellte bekannte Weise verbunden.

Die Außenhaut 1 ist an ihren Rändern, von denen in den Figuren 1 und 2 stellvertretend für die anderen Ränder nur ein Rand dargestellt ist, mit einer umlaufenden Aufkantung 6 versehen, die bei diesem Ausführungsbeispiel zunächst für die Herstellung des Fahrzeugdachs eine größere Höhe (Fig. 1) aufweist als nach dem Randbeschneiden (Fig. 2). Wie aus Fig. 1 hervorgeht, geht die umlaufende Aufkantung 6 in einen davon nach außen abgewinkelten umlaufenden Flanschrand 7 über, der hier ebenso wie ein erheblicher Teil der Aufkantung 6 bei dem späteren Randbeschneidungsvorgang entfernt wird, wie sich aus einem Vergleich der Figuren 1 und 2 ergibt.

Die in Fig. 1 dargestellte Schäumform besteht aus einem die tiefgezogene Außenhaut 1 formschlüssig aufnehmenden Unterteil 8 und einem komplementären Oberteil 9, in dessen Randbereich eine aufblasbare umlaufende Dichtung 10 angeordnet ist, welche für eine Begrenzung des aufschäumenden die Kunststoffschicht 2 bildenden Kunststoffs sorgt. Das dekorative Flächengebilde 3 ist in aufgespannter Form mittels eines in einer Nut 11 des Oberteils 9 eingesetzten Spannrahmens 12 vorübergehend am Oberteil 9 der Schäumform befestigt.

Bei der Herstellung des Fahrzeugdachs wird zunächst die Außenhaut 1 tiefgezogen, im Falle der Verwendung eines Metallblechmaterials durch mehrstufiges hydraulisches Tiefziehen und im Falle der Verwendung einer Kunststoffolie durch Vakuumtiefziehen bei entsprechender Aufspannung des Folienrands. Im letzteren Fall werden beide Seiten der tiefzuziehenden Kunststoffolie durch Heizelemente auf etwa 180°C Oberflächentemperatur erwärmt. Die so erwärmte Kunststoffolie wird dem Vakuumtiefziehvorgang unterworfen.

Der tiefgezogene Vorformling der Außenhaut 1 wird danach mit seiner Innenseite nach oben weisend in das Unterteil 8 der in Fig.1 dargestellten Schäumform eingelegt, worauf der aufschäumbare Kunststoff auf die weiter vorn angegebene Weise auf die Innenseite der Außenhaut 1 aufgebracht wird. Falls es sich um eine Außenhaut aus Kunststoffolie handelt, kann diese zuvor durch Abflämmen aktiviert werden. Als Schaumkunststoff wird beispielsweise ein Schaumsystem der Firma Elastogran verwendet, bestehend aus Polyol B 237 und Isocyanat E 3509, wobei diese beiden Komponenten im Mischungsverhältnis von 100 Teile Polyol zu 210 Teile Isocyanat angewendet werden. Nach dem Auftrag der aufschäumbaren Kunststoffmasse nach dem LFI-Verfahren wird das Oberteil 9 der Form mit dem daran befestigten Flächengebilde 3 in Position gebracht, worauf der mit Glasfasern beladene aufschäumende Kunststoff den gesamten Freiraum der Schäumform bis auf die Oberseite des Flanschrands 7 und dort begrenzt durch die aufgeblasene Dichtung 10 füllt.

Beispielsweise werden 3,7 kg der Schaumkunststoffkomponenten mit 1 kg Glasfasern gemischt, was einem Glasanteil im Schaumkunststoff von < 25 Gew.% entspricht.

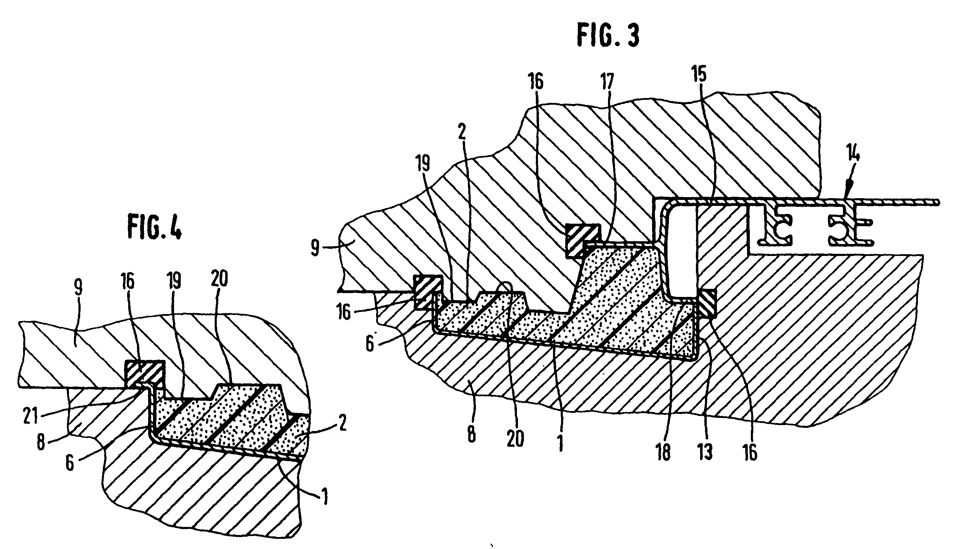

Das in Fig. 3 in der Schäumform befindliche Fahrzeugdach gemäß dem zweiten Ausführungsbeispiel soll nachfolgend nur hinsichtlich der sich vom ersten Ausführungsbeispiel unterscheidenden Merkmale beschrieben werden.

Neben der äußeren umlaufenden Aufkantung 6 besitzt bei diesem Ausführungsbeispiel die Außenhaut 1 auch eine innere umlaufende Aufkantung 13, die in der gleichen Richtung wie die Aufkantung 6 abgewinkelt ist und im fertigen Zustand des Fahrzeugdachs eine Dachöffnung begrenzt, welche mittels eines nicht gezeigten Schiebedeckels wahlweise abgedeckt werden kann. Die wie beschrieben armierte Kunststoffschicht 2 erstreckt sich bis an die Aufkantungen 6 und 13 heran, wodurch das Fahrzeugdach eine ausreichende Steifigkeit erhält.

Weiterhin ist zu erkennen, daß sich im in der Schäumform befindlichen Zustand weder an die Aufkantung 6 noch an die Aufkantung 13 ein nach außen bzw. nach innen abgewinkelter Flanschrand anschließt. Hier erfolgt ein innerer und äußerer Randbeschnitt der Außenhaut 1, bei dem auch nach dem Tiefziehvorgang ggf. noch vorhandene Flanschränder der Außenhaut 1 entfernt werden, bevor die Außenhaut 1 in das Unterteil 8 der Schäumform eingelegt wird. Zweckmäßig kann die Aufkantung 6 der in das Unterteil 8 der Schäumform eingelegten Außenhaut 1 geringfügig über das Unterteil 8 vorstehen.

Nach Einlegen der Außenhaut 1 in das Unterteil 8 der Schäumform wird ein an sich bekanntes, vorzugsweise aus einer Aluminiumlegierung stranggepreßtes Führungsprofil 14, welches Bestandteil einer Mechanik zum Verschieben des Schiebedeckels ist, ebenfalls in das Unterteil 8 der Schäumform eingelegt. Dieses bündig mit der Aufkantung 13 abschließende Führungsprofil 14 begrenzt im dargestellten geschlossenen Zustand der Schäumform den sich durch den aufschäumenden Kunststoff füllenden Hohlraum in der Schäumform, wobei das Führungsprofil 14 mit einem Schenkel 15 zwischen dem Unterteil 8 und dem Oberteil 9 der Schäumform unverrückbar festgelegt ist. Um zu verhindern, daß beim Schäumvorgang der mit Glasfasern beladene aufschäumende Kunststoff zwischen dem Unterteil 8 und dem Oberteil 9 der Schäumform aus- bzw. durchtritt, sind aus vorzugsweise EPDM bestehende Dichtungen 16 mit geeignetem Querschnitt an den Enden der Aufkantungen 6, 13 und an Endabschnitten 17, 18 des Führungsprofils 14 im Unterteil 8 bzw. im Oberteil 9 der Schäumform vorgesehen. Schließlich werden durch geeignete Ausbildung des Oberteils 9 der Schäumform eine Nut 19 sowie eine Auflagefläche 20 als Funktionsabschnitte des Fahrzeugdachs beim Schäumvorgang gleich mit erzeugt. Die Nut 19 dient bei Montage des modulartigen Fahrzeugdachs am Fahrzeug der Aufnahme einer Klebstoffraupe, mittels der das Fahrzeugdach am fahrzeugseitigen Dachrahmen befestigt wird, während die Auflagefläche 20 im montierten Zustand des Fahrzeugdachs dem Dachrahmen definiert aufliegt.

Im fertigen Zustand des Fahrzeugdachs ist das Führungsprofil 14 flächig an der Kunststoffschicht 2 angeschäumt, so daß das Führungsprofil 14 fest mit dem Fahrzeugdach verbunden ist, ohne daß weitere Befestigungsmittel notwendig wären. Besonders hervorzuheben ist hier noch, daß dieses für einen Schiebedeckel vorgerüstete Fahrzeugdach infolge seiner Ausbildung mit umlaufenden Aufkantungen 6, 13 an der Außenhaut 1 und sich dazwischen erstreckender, wie oben beschrieben armierter Kunststoffschicht 2 gänzlich ohne den im Stand der Technik üblichen Verstärkungsrahmen auskommt, der dort die Dachöffnung umgibt und an dem herkömmlicherweise die Führungsprofile für den Schiebedeckel befestigt sind.

Das in Fig. 4 gezeigte dritte Ausführungsbeispiel unterscheidet sich von dem unter Bezugnahme auf die Fig. 3 beschriebenen zweiten Ausführungsbeispiel dadurch, daß die Aufkantung 6 der Außenhaut 1 in einen davon nach außen abgewinkelten umlaufenden Flanschrand 21 übergeht. Im Gegensatz zum ersten Ausführungsbeispiel gemäß Fig. 1 ist der umlaufende Flanschrand 21 so kurz ausgebildet, daß er beim Aufschäumen der armierten Kunststoffschicht 2 auf der Innenseite der Außenhaut 1 der Dichtung 16 im Oberteil 9 der Schäumform über seine gesamte Breite flächig anliegt. Da der Flanschrand 21 dabei dem Unterteil 8 der Schäumform aufliegt, wird er im geschlossenen Zustand der Schäumform in die Dichtung 16 hineingedrückt. Im Ergebnis wird die Schäumform für den Schäumvorgang zwischen dem Unterteil 8 und dem Oberteil 9 zuverlässig abgedichtet, ohne daß die Gefahr besteht, daß die Aufkantung 6 bzw. der Flanschrand 21 die Dichtung 16 beschädigt. Auch bei diesem Ausführungsbeispiel erfolgt ein Randbeschnitt der Außenhaut 1 bevor diese in das Unterteil 8 der Schäumform eingelegt wird. Der Randbeschnitt kann gleichzeitig mit dem Tiefziehen der Außenhaut 1 oder in einem Folgeschritt dazu durch Stanzen oder Feinschneiden ausgeführt werden.

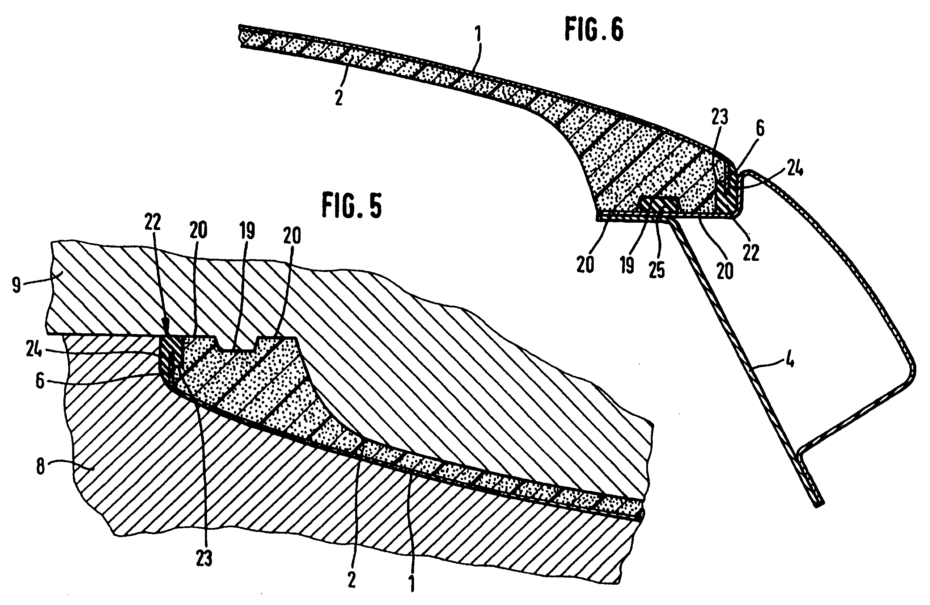

Bei dem in den Fig. 5 und 6 dargestellten vierten Ausführungsbeispiel ist auf die umlaufende Aufkantung 6 der Außenhaut 1 eine ebenfalls umlaufende Dichtung 22 aufgesteckt, die einen zweischenkligen, im wesentlichen U-förmigen Querschnitt aufweist. Gemäß Fig. 5 wird die Dichtung 22 schon beim Aufschäumen der Kunststoffschicht 2 auf der bereits randbeschnittenen Außenhaut 1 mit an die Kunststoffschicht 2 angeschäumt, und zwar mit ihrem inneren Schenkel 23, der sich allerdings nur über einen Teil der Gesamthöhe der Aufkantung 6 erstreckt, damit die armierte Kunststoffschicht 2 auch bis zur Aufkantung 6 reichen kann. Beim Schäumvorgang dient die Dichtung 22 vorteilhaft bereits als Abdichtelement zwischen dem Unterteil 8 und dem Oberteil 9 der Schäumform.

Wie in Fig. 6 zu erkennen ist, bildet der äußere Schenkel 24 der Dichtung 22 im an der Fahrzeugkarosserie montierten Zustand des Fahrzeugdachs zum einen eine Dichtungsfläche aus, um zwischen Fahrzeugdach und Dachrahmen 4 abzudichten. Zum anderen hat der äußere Schenkel 24 der Dichtung 22 aufgrund seiner Elastizität eine das Fahrzeugdach bezüglich des Dachrahmens 4 zentrierende Wirkung. Die Dichtung 22 besteht im übrigen aus einem Werkstoff, der den insbesondere thermischen und mechanischen Beanspruchungen in der Schäumform und im am Fahrzeug montierten Zustand des Fahrzeugdachs hinreichend widerstehen kann, z.B. Moosgummi oder EPDM. Die Fig. 6 veranschaulicht schließlich noch, wie das Fahrzeugdach mittels einer in der Nut 19 aufgenommenen Klebstoffraupe 25 mit dem Dachrahmen 4 der Fahrzeugkarosserie verbunden ist.

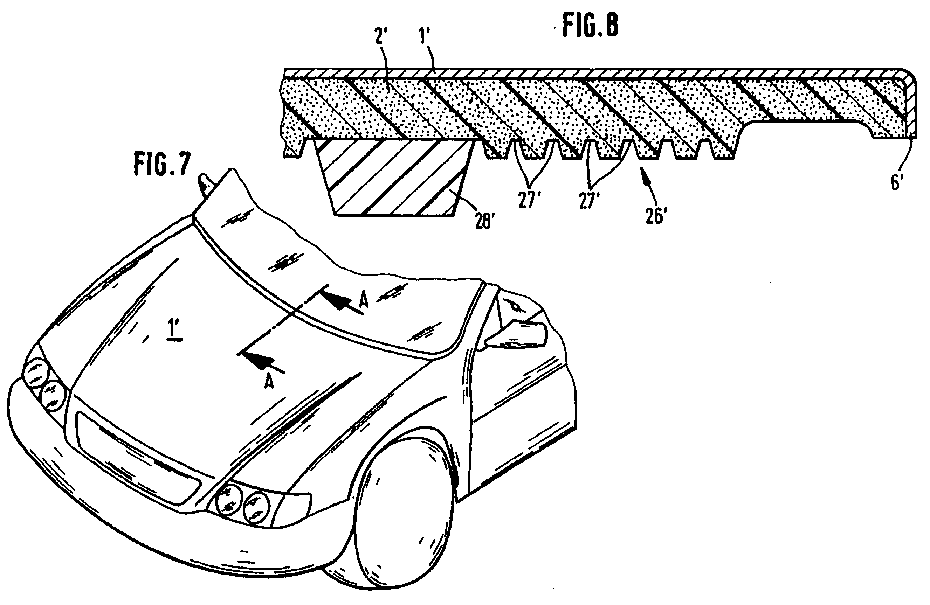

Es wurde bereits eingangs erwähnt, daß nicht nur Fahrzeugdächer, sondern beliebige Flächenbereiche von Fahrzeugkarosserien durch wie beschrieben aufgebaute Verbundbauteile ausgebildet werden können. Exemplarisch dafür ist in den Fig. 7 und 8 noch eine Motorhaube dargestellt, deren tiefgezogene Außenhaut 1' an ihren Rändern rahmenlos ausgebildet und mit einer umlaufenden Aufkantung 6' versehen ist, wobei die auf die Innenseite der Außenhaut 1' aufgeschäumte Kunststoffschicht 2', in der über den gesamten Flächenbereich der Außenhaut 1' eine an sich nicht steife Armierung vorgesehen ist, bis zu der umlaufenden Aufkantung 6' reicht.

Ferner sind in Fig. 8 Maßnahmen dargestellt, die insbesondere die Schallisolationseigenschaften solcher Verbundbauteile noch verbessern. So kann entsprechend der Nut 19 bei den unter Bezugnahme auf die Fig. 3 bis 6 beschriebenen Ausführungsbeispielen, d.h. durch entsprechende Ausbildung des Oberteils der Schäumform bereits beim Aufschäumen der Kunststoffschicht 2' auf der Innenseite der Außenhaut 1' auf der von der Außenhaut 1' abgelegenen Seite der Kunststoffschicht 2' eine schallabsorbierende Oberflächenstruktur 26' hinterschäumt werden, die in dem hier dargestellten Ausführungsbeispiel eine Mehrzahl von parallelen, die Schallreflexion beeinflussenden Nuten 27' aufweist. Ebenso ist es möglich, an diejenige Seite der Kunststoffschicht 2', welche von der Außenhaut 1' abgelegen ist, in einem zweiten Schuß partiell Dämpfungsbereiche 28' mit verminderter Dichte des PUR-Schaummaterials anzuschäumen, wobei eine poröse bzw. offenzellige Mikrostruktur der Oberfläche erzielt werden kann.

Es wird ein Verbundbauteil, insbesondere Fahrzeugdach, vorgeschlagen, bestehend aus einer tiefgezogenen Außenhaut aus Metallblech oder Kunststoffolie und einer der Innenseite der Außenhaut aufgeschäumten Kunststoffschicht. Die Kunststoffschicht besitzt eine innere Armierung durch ihr in gleichmäßiger Verteilung einverleibte Faserstoffe, vorzugsweise Glasfaserstoffe, welche dem Verbundbauteil im Zusammenwirken mit der Außenhaut eine erhebliche Formstabilität und Festigkeit verleihen. Wesentlich ist dabei, daß die faserarmierte Kunststoffschicht auch eine Randaufkantung der Außenhaut verstärkt.

## Patentansprüche

1. Verfahren zum Herstellen eines rahmenlosen Verbundbauteils für Fahrzeugkarosserien,
insbesondere für großflächige Verbundbauteile in Form von Fahrzeugdächern, Hauben, Türen, Klappen und Deckeln, die abschnittsweise die Außenfläche des Fahrzeugs definieren,
**gekennzeichnet durch** folgende Schritte:
eine Folie wird zur Bildung der Außenhaut (1) tiefgezogen unter Bildung einer umlaufenden Aufkantung (6),
die tiefgezogene Folie wird anschließend in eine Schäumform eingelegt,
die Folie wird rückseitig vollflächig hinterschäumt,
indem mit Fasern, insbesondere mit Glasfasern, beladener aufschäumender Kunststoff innenseitig auf die Folie aufgebracht wird,
wobei sich der aufschäumende Kunststoff bis zu der Aufkantung (6) erstreckt und
wobei die Fasern eine an sich nicht steife Armierung bilden, **durch** welche der Elastizitätsmodul der geschäumten Kunststoffschicht (2) erhöht wird.

2. Verfahren nach Anspruch 1, **dadurch gekennzeichnet, daß** als Folie eine Koextrusionsfolie verwendet wird.

3. Verfahren nach Anspruch 1 oder 2, **dadurch gekennzeichnet, daß** als Folie eine thermoplastische zweischichtige Koextrusionsfolie verwendet wird.

4. Verfahren nach einem der vorhergehenden Ansprüche, **dadurch gekennzeichnet, daß** die Folie in der gewünschten Farbe in der Masse durchgefärbt ist.

5. Verfahren nach einem der vorhergehenden Ansprüche, **dadurch gekennzeichnet, daß** die Folie eine Kunststoffolie ist und das fertige Verbundbauteil außenseitig unlackiert bleibt.

6. Verfahren nach einem der vorhergehenden Ansprüche, **dadurch gekennzeichnet, daß** die Folie eine Kunststoffolie ist, die vor Schritt c) innenseitig zur Aktivierung abgeflämmt wird.

7. Verfahren nach einem der vorhergehenden Ansprüche, **dadurch gekennzeichnet, daß** beim Tiefziehen der Rand der Folie zu einem nach außen abgewinkelten umlaufenden Flanschrand (21) geformt wird, so daß die Aufkantung (6) in den Flanschrand (21) übergeht.

8. Verfahren nach Anspruch 7, **dadurch gekennzeichnet, daß** sich der Kunststoff entlang der Aufkantung (6) bis zum/auf den Flanschrand (21) bzw. über die gesamte Höhe der Aufkantung (6) erstreckt.

9. Verfahren nach Anspruch 7, **dadurch gekennzeichnet, daß** sich der Kunststoff umlaufend entlang der Aufkantung (6) bis zum/auf den Flanschrand (21) bzw. über die gesamte Höhe der Aufkantung (6) erstreckt.

10. Verfahren nach einem der Ansprüche 7 bis 9, **dadurch gekennzeichnet, daß** der Flanschrand (21) beim Schäumen zwischen einem Unter- und einem Oberteil (8, 9) geklemmt wird.

11. Verfahren nach einem der vorhergehenden Ansprüche, **dadurch gekennzeichnet, daß** die Aufkantung (6) samt des angrenzenden, ausgehärteten Kunststoffs längs des Umfangs beschnitten wird.

12. Verfahren nach einem der vorhergehenden Ansprüche, **dadurch gekennzeichnet, daß** der Schaumauftrag nicht bis zum später beschnittenen Randbereich der Aufkantung (6) erfolgt und der Kunststoff beim Aufschäumen bis zum Randbereich dringt.

13. Verfahren nach einem der vorhergehenden Ansprüche, **dadurch gekennzeichnet, daß** ein dekoratives Flächengebilde an dem Oberteil (9) des Schäumwerkzeugs befestigt und von diesem in die Schäumposition mitgenommen wird, um nach der Entfernung des Oberteils (9) auf der Kunststoffschicht (2) zu bleiben.

14. Verbundbauteil für Fahrzeugkarosserien, insbesondere großflächiges Verbundbauteil in Form eines Fahrzeugdachs, einer Tür, Klappe oder eines Deckels, welches abschnittsweise die Außenfläche des Fahrzeugs definiert, mit
einer vor dem Schäumen separat tiefgezogenen Außenhaut (1) und
einer auf der Innenseite der Außenhaut (1) aufgeschäumten Kunststoffschicht (2),
wobei die tiefgezogene Außenhaut (1) an ihren Rändern rahmenlos ausgebildet ist und mit einer umlaufenden Aufkantung (6) versehen ist, und
wobei über den gesamten Flächenbereich der Außenhaut (1) eine an sich nicht steife Armierung aus ungeordneten Fasern, insbesondere Glasfasern, mit denen der Kunststoff beladen ist, vorgesehen ist, durch welche der Elastizitätsmodul der geschäumten Kunststoffschicht (2) erhöht ist.

15. Verbundbauteil nach Anspruch 14, **dadurch gekennzeichnet, daß** die Kunststoffschicht (2) bis zum oberen, innenseitigen Rand der Aufkantung (6) reicht.

16. Verbundbauteil nach Anspruch 14 oder 15, **dadurch gekennzeichnet, daß** die Folie eine Koextrusionsfolie ist.

17. Verbundbauteile nach einem der Ansprüche 14 bis 16, **dadurch gekennzeichnet, daß** die Folie eine thermoplastische, zweischichtige Koextrusionsfolie ist.

18. Verbundbauteil nach Anspruch 17, **dadurch gekennzeichnet, daß** die äußere Schicht aus Polymethylmethacrylat (PMMA) und die innere Schicht aus einer Mischung aus Polycarbonat (PC) und Acrylnitril-Styrol-Acrylsäureester-Copolymerisat (ASA) besteht.

19. Verbundbauteil nach einem der Ansprüche 14 bis 18, **dadurch gekennzeichnet, daß** die Folie in der Masse durchgefärbt ist.

20. Verbundbauteil nach einem der Ansprüche 14 bis 19, **dadurch gekennzeichnet, daß** die Folie eine Kunststoffolie ist und das Verbundbauteil außenseitig unlakkiert bleibt.

21. Verbundbauteil nach einem der Ansprüche 14 bis 20, **dadurch gekennzeichnet, daß** die Glasfasern gleichmäßig in der Kunststoffschicht (2) verteilt sind.

22. Verbundbauteil nach einem der Ansprüche 14 bis 21, **dadurch gekennzeichnet, daß** im Bereich des Randes des Verbundbauteils in der Kunststoffschicht (2) eine Nut ausgeformt ist.

23. Verbundbauteil nach einem der Ansprüche 14 bis 22, **dadurch gekennzeichnet, daß** der Anteil an Glasfasern, bezogen auf das Gesamtgewicht des armierten Kunststoffschaums zwischen etwa 20 und 30%, vorzugsweise etwa 25% beträgt.

24. Verbundbauteil nach einem der Ansprüche 14 bis 23, **dadurch gekennzeichnet, daß** Glasfasern unterschiedlicher Länge vorgesehen sind.

25. Verbundbauteil nach einem der Ansprüche 14 bis 24, **dadurch gekennzeichnet, daß** die Folie eine äußere Schicht hat, die zwischen etwa 10 bis 30% der Gesamtdicke der Außenhaut (1) beträgt.

26. Verbundbauteil nach einem der Ansprüche 14 bis 25, **dadurch gekennzeichnet, daß** die Kunststoffschicht (2) entfernt vom Randbereich eine geringere Dicke besitzt als angrenzend an die Aufkantung (6).

27. Verbundbauteil nach einem der Ansprüche 14 bis 26, **dadurch gekennzeichnet, daß** das Verbundbauteil entfernt vom Rand eine in etwa gleichmäßig dicke Kunststoffschicht (2) hat und die Kunststoffschicht (2) angrenzend an die Aufkantung (6) eine größere Dicke quer zur Haupterstreckungsrichtung des Verbundbauteils besitzt.

28. Verbundbauteil nach einem der Ansprüche 14 bis 27, **dadurch gekennzeichnet, daß** die Aufkantung (6) und der ausgehärtete Kunststoff längs des freien Randes beschnitten sind.

29. Verbundbauteil nach einem der Ansprüche 14 bis 28, **dadurch gekennzeichnet, daß** das Verbundbauteil einen nach außen abgewinkelten umlaufenden Flanschrand (21) hat, in den die Aufkantung (6) übergeht, und
daß sich die Kunststoffschicht (2) bis zum/auf den Flanschrand (21) erstreckt.

30. Verbundbauteil nach einem der Ansprüche 14 bis 29, **dadurch gekennzeichnet, daß** die Kunststoffschicht (2) auf ihrer innenseitigen Oberfläche mit einem textilen Flächengebilde oder einer dekorativen Kunststoffolie versehen ist, die vorzugsweise durch das Schäumen mit der Kunststoffschicht (2) verbunden ist.

31. Verbundbauteil nach Anspruch 30, **dadurch gekennzeichnet, daß** das Flächengebilde mit einer der Kunststoffschicht (2) zugekehrten Sperrschicht versehen ist.

32. Verbundbauteil nach einem der Ansprüche 14 bis 31, **dadurch gekennzeichnet, daß** die Kunststoffschicht (2) aus einem PUR-Schaum, gebildet aus einem Polyol und einem Isocyanat im Mischungsverhältnis von etwa 1 zu 2 besteht.

33. Verbundbauteil nach einem der Ansprüche 14 bis 32, **dadurch gekennzeichnet, daß** auf der von der Außenhaut (1) abgelegenen Seite die Kunststoffschicht (2) eine schallabsorbierende Oberfläche bildet.

34. Verbundbauteil nach einem der Ansprüche 14 bis 33, **dadurch gekennzeichnet, daß** die Kunststoffschicht (2) Abschnitte geringerer und Abschnitte größerer Dichte hat, die unter Bildung einer gekrümmten Innenfläche kontinuierlich ineinander übergehen.
